# EUROPEAN PATENT SPECIFICATION

(11) **EP 2 843 727 B1**
(45) Date of publication and mention of the grant of the patent: **02.05.2018**
(21) Application number: 13782012.2
(22) Date of filing: 14.03.2013
(51) Int. Cl.: H01M 2/36, H01M 2/10, H01M 10/613, H01M 10/625, H01M 10/6562

(54) **BATTERY DEVICE**
BATTERIEVORRICHTUNG
DISPOSITIF DE BATTERIE

(30) Priority: 25.04.2012 JP 2012100223
(43) Date of publication of application: 04.03.2015
(73) Proprietor: Mitsubishi Jidosha Kogyo Kabushiki Kaisha, Tokyo 108-8410 (JP)
(72) Inventor: MATSUYAMA, Ryusuke, Tokyo 108-8410 (JP)
(74) Representative: Vossius & Partner Patentanwälte Rechtsanwälte mbB
(86) International application number: PCT/JP2013/057286
(87) International publication number: WO 2013/161427

(56) References cited:
- WO-A1-2011/015411
- DE-A1-102010 034 826
- JP-A- 2007 200 880
- JP-A- 2008 251 263
- JP-A- 2009 087 646
- JP-B1- 4 759 659
- JP-U- 3 175 210
- US-A1- 2011 000 801

## Description

### [Technical Field]

This invention relates to a battery device installed, for example, in an electric vehicle.

### [Background Art]

In recent years, electric vehicles have come into markedly widespread use. The electric vehicle is loaded with a battery device having a plurality of battery cells housed in a battery case, and the battery device supplies electric power mainly for driving. The battery device is equipped with a multiplicity of battery cells, and is adapted to suppress temperature rises of the battery cells due to repeated charging and discharging (see Patent Documents 1 and 2).

A known example of the battery device adapted to suppress the temperature rises of the battery cells is one in which many battery cells are arranged so as to flow air between them. The battery device of such a configuration has the battery case whose interior is not sealed. If the inside battery cell is damaged, or if water enters the interior of the battery case, therefore, heat generation is likely to occur. In case a problem or the like happens with the battery device, making it unusable, water may be poured into the battery case to accumulate water inside the battery case and force the battery cells to discharge.

If a problem or the like happening with the battery device makes its use impossible, the electric vehicle with the defective battery device is, for example, placed on a carrier car and transported to a plant for treatment. If the electric vehicle is moved, with water being accumulated inside the battery case, however, the battery case may tilt, or vibrate during movement, spilling water inside the battery case to the outside.

### [Prior Art Documents]

### [Patent Documents]

[Patent Document 1] JP-A-2009-193881
[Patent Document 2] JP 2009 087646 A

### [Summary of the Invention]

### [Problems to be solved by the invention]

The present invention has been accomplished in the light of the above-mentioned circumstances . It is an object of the present invention to provide a battery device which does not allow water inside a battery case to spill to the outside even when the water has been poured into the battery case.

### [Means for Solving the Problems]

The invention is defined by the subject-matter of the appended claims. A battery device according to a first aspect of the present invention, intended for attaining the above-mentioned object, comprises a battery case accommodating a multiplicity of battery cells, a pouring port provided in the battery case for pouring water into the battery case, and water absorbing means arranged inside the battery case.

According to the first aspect of the present invention, when water has been poured through the pouring port into the battery case, the water is absorbed by the water absorbing means. Even if the battery case tilts, or vibrates during movement, the water is absorbed by the water absorbing means and held thereby.

Thus, even in a state where the interior of the battery case is filled with water, the water inside can be prevented from spilling. Since the water is held absorbed by the water absorbing means, moreover, the water does not move inside the battery case. Consequently, an unusual sound due to interference between different parts of the water does not occur. Nor does an unusual sound occur owing to the interference of water with the wall surface or the like.

A battery device according to a second aspect of the present invention is the battery device according to the first aspect, wherein the water absorbing means is an electroconductive superabsorbent polymer (water absorbing polymer).

According to the second aspect of the present invention, the superabsorbent polymer (water absorbing polymer) is used as the water absorbing means. Thus, water in an amount of 100 times to 1,000 times the weight of the polymer can be absorbed. In this manner, a large amount of water can be held using a small amount of the water absorbing polymer.

A battery device according to a third aspect of the present invention is the battery device according to the second aspect, wherein gaps where a cooling fluid is allowed to be present are formed between the battery case and the battery cells, the superabsorbent polymer is arranged in the gaps, and water introduced from outside the battery case is absorbed by the superabsorbent polymer.

According to the third aspect of the present invention, the superabsorbent polymer is arranged in the gaps through which the cooling fluid flows, and water is poured into the battery case through an inlet port for cooling air, a service plug lid or the like, whereby water is absorbed by the superabsorbent polymer in a space where the battery cells are not arranged.

A battery device according to a fourth aspect of the present invention is the battery device according to the third aspect, wherein the superabsorbent polymer is arranged in the gaps in such a state as to become exposed and contact water when water is introduced from outside through the pouring port of the battery case.

According to the fourth aspect of the present invention, the superabsorbent polymer becomes exposed so as to contact water when water is introduced. When no water has been introduced, the superabsorbent polymer is cut out from the external atmosphere, and does not absorb water in the presence of moisture or the like.

A battery device according to a fifth aspect of the present invention is the battery device according to the fourth aspect, wherein demarcated regions are formed in the gaps on the bottom side of the battery case, the superabsorbent polymer is arranged in the demarcated regions, a sealing film is provided on the upper surface of the demarcated regions, the sealing film is a film which ruptures under the weight of water accumulated on top of the film when water is introduced from outside the battery case, and the superabsorbent polymer is exposed so as to contact water upon rupture of the sealing film under the weight of water.

According to the fifth aspect of the present invention, the sealing film is ruptured by the weight of water accumulated on top of the sealing film, whereby the superabsorbent polymer is exposed and brought into contact with water. Thus, with absorption of water from moisture or the like being inhibited, contact with water can be made reliably when necessary.

A battery device according to a sixth aspect of the present invention is the battery device according to the third aspect, wherein the superabsorbent polymer is arranged in the interior of the battery case around the pouring port through which water is introduced.

According to the sixth aspect of the present invention, the superabsorbent polymer is arranged in the surroundings of the site for introduction of water. If water inside moves outwardly toward the introduction portion, therefore, the water is absorbed in the surroundings of the introduction portion, and spillage of water to the outside is reliably prevented. It is also possible to use a colored superabsorbent polymer.

### [Effects of the Invention]

The battery device of the present invention is free from spillage of inside water to the outside even when water has been poured into the battery case.

### [Brief Description of the Drawings]

[Fig. 1] is an appearance drawing of an electric vehicle equipped with a battery device according to an embodiment of the present invention.
[Fig. 2] is an exploded perspective view of a battery case.
[Fig. 3] is a plan view of the battery case.
[Fig. 4] is an enlarged view of an essential part in Fig. 3.
[Fig. 5] is a view taken along line V-V in Fig. 4.
[Figs. 6(a), 6(b)] are explanation drawings of states where water has been poured in.

### [Mode for Carrying Out the Invention]

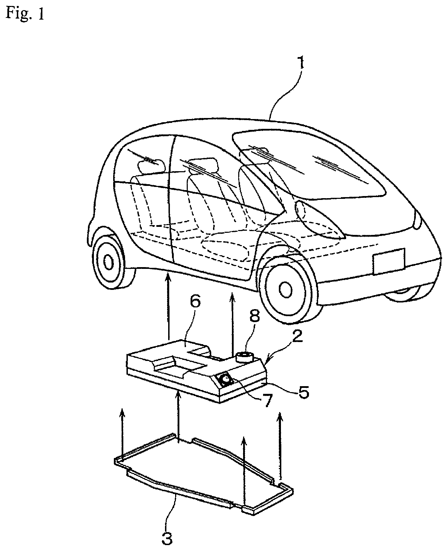

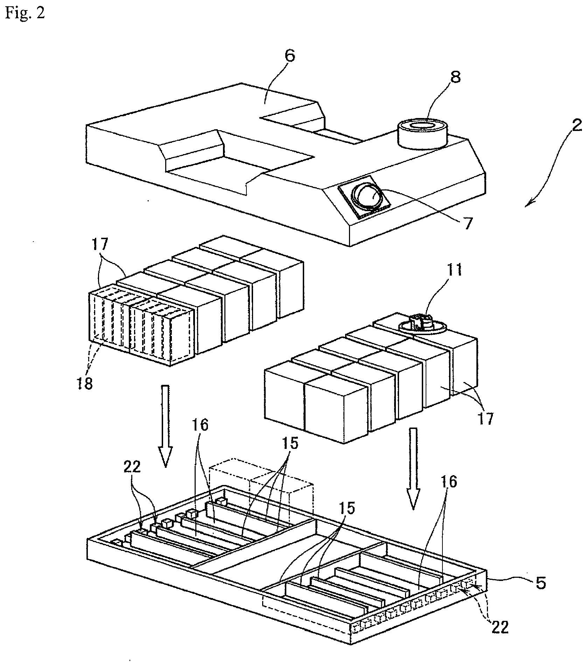

An electric vehicle equipped with a battery device according to an embodiment of the present invention will be described based on Figs. 1 and 2. Fig. 1 shows the appearance of the electric vehicle equipped with the battery device according to the embodiment of the present invention. Fig. 2 shows an exploded view, in perspective, of a battery case for illustrating the internal structure of the battery case.

As shown in Fig. 1, a lower frame (not shown) of an electric vehicle 1 is mounted with a battery case 2, and the battery case 2 is covered with a floor panel 3 to constitute a floor member. Many battery module cases are housed in the battery case 2 covered with the floor panel 3, and each battery module case accommodates a plurality of battery cells . The battery cells are interconnected to form a high voltage circuit serving as a power supply for traveling drive or the like.

The battery case 2 is composed of a bottom plate 5 and a cover case 6 which covers the top of the bottom plate 5 and where a duct for cooling air is formed. An inlet port 7 for cooling air is provided on a front side of the cover case 6 in a front-rear direction of the electric vehicle 1. In the cover case 6, a service hole portion 8 is provided to oppose a service plug 11 to be described later.

As shown in Fig. 2, a multiplicity of module storage portions 16 are formed by partition plates 15 on the upper surface of the bottom plate 5 of the battery case 2. Each module storage portion 16 houses a predetermined number of battery module cases 17. Each battery module case 17 accommodates a plurality of battery cells 18, and all the battery cells 18 are connected together to form a high voltage circuit. The high voltage circuit is connected to the outside via the service plug 11.

Cooling air is introduced as a cooling fluid into the battery case 2 through the inlet port 7. The cooling air introduced flows through the interior of the battery case 2, and further flows through the interior of the battery module case 17 to cool the battery cells 18. That is, gaps for interposing cooling air between the battery module cases 17 and the battery cells 18 are formed inside the battery case 2.

For example, air taken in during travel of the electric vehicle 1 is introduced into the battery case 2 through the inlet port 7, and air supplied in accordance with travel flows through the interior of the battery case 2 and the interior of the battery module case 17. Moreover, cooling air can be forced to flow inside.

If the battery cell 18 is damaged, or water enters the interior of the battery case 2, owing to an accident or the like of the electric vehicle 1, there is a fear of heat generation. If a trouble or the like occurs to the battery device, making it unusable, therefore, it is common practice to pour water into the battery case 2 through the inlet port 7 (pouring port) or the service hole portion 8 (pouring port) to store water inside, thereby forcibly discharging the battery cell 18.

A superabsorbent polymer (water absorbingpolymer), as a water absorbing means for absorbing water, is arranged inside the battery case 2 (in the gaps for interposing cooling air) of the battery device according to the present embodiment. As the water absorbing polymer, a particulate form of sodium polyacrylate, for example, is applied. When water is poured into the battery case 2 to discharge the battery cells 18 forcibly, the water absorbing polymer absorbs water in an amount of 100 to 1000 times the weight thereof, and the large amount of water is held in the form of gel.

Thus, even if water is poured into the battery case 2, water inside does not spill to the outside any more. Since water is held by the water absorbing polymer, moreover, water does not move inside the battery case 2. Nor is any unusual sound caused by the interference of different parts of the water or by the interference of water with the wall surface or the like.

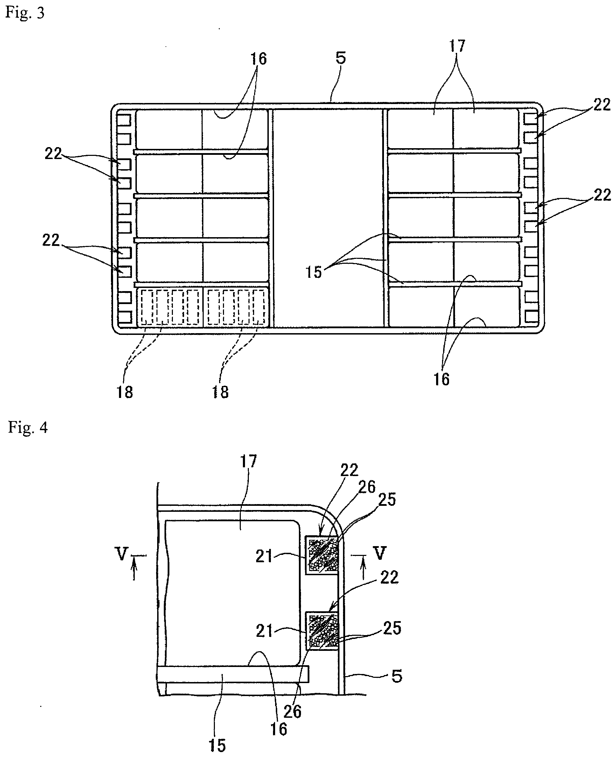

The arrangement status of the water absorbing polymer will be explained based on Figs. 3 to 5.

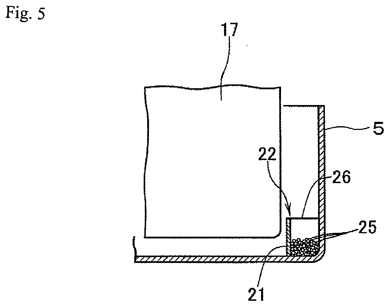

Fig. 3 shows a plan view of the battery case having the cover case removed. Fig. 4 shows the details of an essential part in Fig. 3. Fig. 5 shows a view taken along line V-V in Fig. 4.

As shown in the drawings, accommodating portions 22, as demarcated regions partitioned off like small compartments by partition walls 21, are formed at appropriate locations of gap sections, where cooling air is interposed, around the module storage portions 16 of the bottom plate 5 of the battery case 2. In each accommodating portion 22, a small amount of a water absorbing polymer 25 is disposed. A sealing film 26 (e.g., a vinyl film) is provided on the top surface of the accommodating portion 22 (the film is stuck thereto by adhesion, fusion bonding or the like) .

The water absorbing polymer 25 is cut off from the external atmosphere by the sealing film 26, and does not absorb water from moisture or the like. The sealing film26 is a film which is ruptured by the weight of water accumulated above (including the film which peels off under the weight of water) when water has been introduced into the battery case 2. Upon rupture of the sealing film 26 by the weight of water, the water absorbing polymer 25 is exposed to contact water.

In other words, the water absorbing polymer 25 is arranged in the gaps, where cooling air is interposed, in such a state as to become exposed and contact water when water is introduced from the outside of the battery case 2. As a result of the rupture of the sealing film 26 by the weight of water accumulated above the sealing film 26, the water absorbing polymer 25 is exposed and brought into contact with water. Thus, the water absorbing polymer 25, which has been kept from absorbing water from moisture or the like, can be reliably contacted with water in case of necessity.

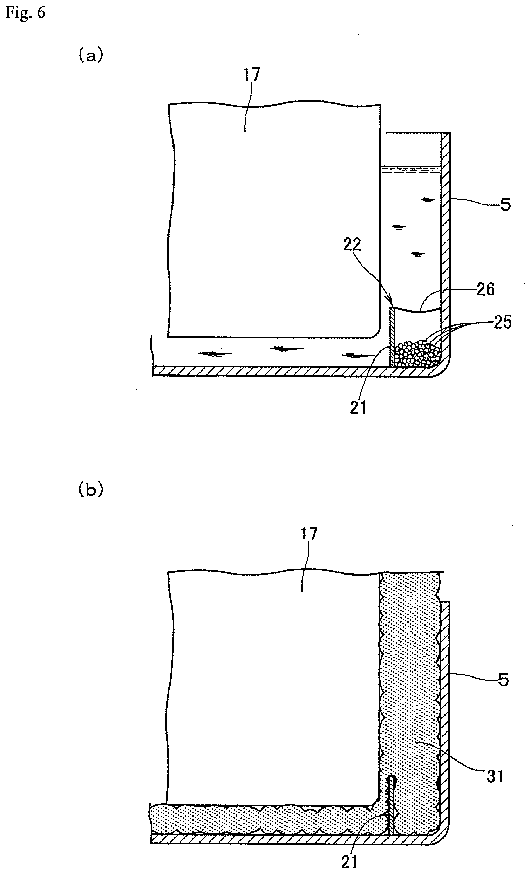

The situations of the battery device of the present embodiment when water is poured in will be explained based on Figs. 6 (a) and 6 (b). Fig. 6 (a) shows a state in which water poured in has been accumulated on top of the accommodating portion 22. Fig. 6(b) shows a state where the sealing film 26 has been ruptured by the weight of water, with the result that the water absorbing polymer 25 has made contact with water.

If damage to the battery cell 18 or entry of water into the battery case 2 occurs, water is poured into the battery case 2 through the inlet port 7 or the service hole portion 8 of the battery case 2 to accumulate water inside, thereby forcibly discharging the battery cell 18. Upon pouring of water into the battery case 2, the poured water is accumulated on top of the sealing film 26, as shown in Fig. 6(a).

When the pouring of water continues to increase the amount of water on top of the sealing film 26, the sealing film 26 ruptures (the sealing film26 peels off) under the weight of water accumulated on the sealing film 26, as shown in Fig. 6(b) . As a result of rupture of the sealing film 26 under the weight of water accumulated on top of the sealing film 26, the water absorbing polymer 25 is exposed and brought into contact with water, whereby water is absorbed by the water absorbing polymer 25. Upon absorption of water into the water absorbing polymer 25, a large amount of water is held in the form of a gel-like member 31.

Even when water has been poured into the battery case 2, as noted above, water inside does not spill to the outside. Thus, in case a malfunction or the like occurs in the battery device to make it unusable, the electric vehicle 1 has to be loaded on a carrier car, for example, for transportation to a treatment place. During its transportation, water inside the battery case 2 does not spill outside, even if the battery case 2 tilts or undergoes vibrations during movement.

Since water inside the battery case 2 is held absorbed by the water absorbing polymer 25, moreover, the water does not move inside the battery case 2. Consequently, an unusual sound due to interference between different parts of the water does not occur. Nor does an unusual sound occur owing to the interference of water with the wall surface or the like.

The position where the water absorbing polymer 25 is arranged can be any position inside the battery case 2. For example, the water absorbing polymer 25 can be arranged inside the battery case 2 in the surroundings of the inlet port 7 or the service hole portion 8. Even if water inside moves outwardly toward the inlet port 7 or the service hole portion 8, the water is absorbed by the water absorbing polymer 25 around the inlet port 7 or the service hole portion 8, so that the water is reliably prevented from spilling to the outside. Furthermore, the water absorbing polymer which has been colored can also be used.

The above-described battery device is free from spillage of water inside the battery case 2 even when water has been poured into the battery case 2. Even in the presence of vibrations during movement such as transportation, moreover, no interference occurs between different parts of water or between water and the wall surface. Thus, no unusual sound is generated.

### [Industrial Applicability]

The present invention can be utilized in the industrial field of battery devices loaded onto electric vehicles, etc.

### [Explanations of Letters or Numerals]

- 1: Electric vehicle
- 2: Battery case
- 3: Floor panel
- 5: Bottom plate
- 6: Cover case
- 7: Inlet port
- 8: Service hole portion
- 11: Service plug
- 15: Partition plate
- 16: Module storage portion
- 17: Battery module case
- 18: Battery cell
- 21: Partition wall
- 22: Accommodating portion
- 25: Superabsorbent polymer (water absorbing polymer)
- 26: Sealing film
- 31: Member (gel-like member)

## Claims

1. A battery device having a battery case (2) housing a plurality of battery module cases (17), each battery module case (17) accommodating a multiplicity of battery cells (18), the battery device comprising:
a pouring port (7, 8) provided in the battery case (2) for pouring water into the battery case (2) in order to forcibly discharge the battery cell (18) if the battery device becomes unusable; and **characterised in that** an electroconductive superabsorbent polymer (25) arranged inside the battery case (2),
wherein gaps where a cooling fluid is allowed to be present are formed between the battery case (2) and the battery cells (18),
the superabsorbent polymer (25) adapted to absorb water introduced from outside the battery case (2) is arranged in the gaps,
upon absorption of water, the superabsorbent polymer (25) turns into a gel-like member (31) between the battery cells (18) and the battery case (2), and
the water is held by the gel-like member (31) to bring the gel-like member (31) into contact with at least one of the battery module cases (17) and the battery case (2).

2. The battery device according to claim 1, wherein
demarcated regions (22) are formed in the gaps on a bottom side of the battery case (2),
the superabsorbent polymer (25) is arranged in the demarcated regions (22),
a sealing film (26) is provided on an upper surface of the demarcated regions (22);
the sealing film (26) is a film which ruptures under a weight of water accumulated on top of the film when water is introduced from outside the battery case (2) through the pouring port (7, 8), and
the superabsorbent polymer (25) becomes exposed so as to contact water upon rupture of the sealing film (26) under the weight of water.

## Patentansprüche

1. Batterievorrichtung mit einem Batteriegehäuse (2), das mehrere Batteriemodulgehäuse (17) aufnimmt, wobei jedes Batteriemodulgehäuse (17) mehrere Batteriezellen (18) aufnimmt, wobei die Batterievorrichtung aufweist:
eine im Batteriegehäuse (2) ausgebildete Einfüllöffnung (7, 8) zum Einfüllen von Wasser in das Batteriegehäuse (2), um die Batteriezelle (18) zwangsweise zu entladen, wenn die Batterievorrichtung unbrauchbar wird;
**dadurch gekennzeichnet, dass**
ein elektrisch leitfähiges Superabsorbens-Polymer (25) im Inneren des Batteriegehäuses (2) angeordnet ist,
wobei Zwischenräume, in denen ein Kühlfluid vorhanden sein kann, zwischen dem Batteriegehäuse (2) und den Batteriezellen (18) ausgebildet sind,
das Superabsorbens-Polymer (25), das dazu geeignet ist, Wasser zu absorbieren, das von außerhalb des Batteriegehäuses (2) zugeführt wird, in den Zwischenräumen angeordnet ist,
das Superabsorbens-Polymer (25) bei der Absorption von Wasser sich in ein gelartiges Element (31) zwischen den Batteriezellen (18) und dem Batteriegehäuse (2) umwandelt, und
das Wasser durch das gelartige Element (31) gehalten wird, um das gelartige Element (31) in Kontakt mit mindestens einem der Batteriemodulgehäuse (17) und dem Batteriegehäuse (2) zu bringen.

2. Batterievorrichtung nach Anspruch 1, wobei
in den Zwischenräumen auf einer Unterseite des Batteriegehäuses (2) abgegrenzte Bereiche (22) ausgebildet sind,
das Superabsorbens-Polymer (25) in den abgegrenzten Bereichen (22) angeordnet ist,
eine Abdichtfolie (26) auf einer oberen Fläche der abgegrenzten Bereiche (22) angeordnet ist,
die Abdichtfolie (26) eine Folie ist, die unter dem Gewicht von Wasser reißt, das sich auf der Folie ansammelt, wenn Wasser von außerhalb des Batteriegehäuses (2) über die Einfüllöffnung (7, 8) zugeführt wird, und
das Superabsorbens-Polymer (25) beim Aufreißen der Abdichtfolie (26) unter dem Gewicht von Wasser freigelegt wird und mit Wasser in Kontakt kommt.

## Revendications

1. Dispositif de batterie qui comporte un boîtier de batterie (2) qui contient une pluralité de boîtiers de module de batterie (17), chaque boîtier de module de batterie (17) logeant une multiplicité de cellules de batterie (18), le dispositif de batterie comprenant :
un orifice verseur (7, 8) qui est prévu dans le boîtier de batterie (2) pour verser de l'eau à l'intérieur du boîtier de batterie (2) afin de décharger de façon forcée la cellule de batterie (18) si le dispositif de batterie devient inutilisable ; et
**caractérisé en ce que** :
un polymère super-absorbant électro-conducteur (25) est agencé à l'intérieur du boîtier de batterie (2) ; dans lequel :
des espaces au niveau desquels un fluide de refroidissement est autorisé à être présent sont formés entre le boîtier de batterie (2) et les cellules de batterie (18) ;
le polymère super-absorbant (25) qui est adapté de manière à ce qu'il absorbe l'eau qui est introduite depuis l'extérieur du boîtier de batterie (2) est agencé dans les espaces ;
suite à l'absorption de l'eau, le polymère super-absorbant (25) devient un élément similaire à un gel (31) entre les cellules de batterie (18) et le boîtier de batterie (2) ; et
l'eau est retenue par l'élément similaire à un gel (31) de manière à amener l'élément similaire à un gel (31) en contact avec au moins un boîtier des boîtiers de module de batterie (17) et le boîtier de batterie (2).

2. Dispositif de batterie selon la revendication 1, dans lequel :
des régions démarquées (22) sont formées dans les espaces sur un côté de fond du boîtier de batterie (2) ;
le polymère super-absorbant (25) est agencé dans les régions démarquées (22) ;
un film d'étanchéité (26) est prévu sur une surface supérieure des régions démarquées (22) ;
le film d'étanchéité (26) est un film qui se rompt sous l'effet d'un poids de l'eau accumulée sur le dessus du film lorsque de l'eau est introduite depuis l'extérieur du boîtier de batterie (2) par l'intermédiaire de l'orifice verseur (7, 8) ; et
le polymère super-absorbant (25) devient exposé de sorte qu'il entre en contact avec l'eau suite à la rupture du film d'étanchéité (26) sous l'effet du poids de l'eau.
